# EUROPEAN PATENT APPLICATION

(11) **EP 3 933 571 A1**
(43) Date of publication of application: **05.01.2022**
(21) Application number: 21182238.2
(22) Date of filing: 29.06.2021
(51) Int. Cl.: G06F 8/34, G06F 3/0481

(54) **SYSTEM FOR PROVIDING SOFTWARE DEVELOPMENT ENVIRONMENT, METHOD FOR PROVIDING SOFTWARE DEVELOPMENT ENVIRONMENT, AND NON-TRANSITORY COMPUTER READABLE MEDIUM**

(30) Priority: 01.07.2020 JP 2020114205
(71) Applicant: YOKOGAWA ELECTRIC CORPORATION, Musashino-shi Tokyo 180-8750 (JP)
(72) Inventor: ABE, Koh, Musashino-shi, Tokyo, 180-8750 (JP)
(74) Representative: Winter, Brandl - Partnerschaft mbB

(57) **Abstract**

A system for providing a software development environment, a method for providing a software development environment, and a non-transitory computer readable medium that can improve the convenience of a user interface of a software development environment are provided. A display is configured to display a user interface on which the plurality of development components is placed. A controller is configured to change a display form of each development component and display each development component on the display in accordance with a request to change a display magnification. Each development component is displayed in a display form that includes less information when the display magnification is below a predetermined magnification than when the display magnification is equal to or greater than the predetermined magnification, and each development component is displayed in a display form that includes a corresponding icon regardless of the display magnification.

## Description

### CROSS-REFERENCE TO RELATED APPLICATION

The present application claims priority to Japanese Patent Application No. 2020-114205 filed on July 1, 2020, the entire contents of which are incorporated herein by reference.

### TECHNICAL FIELD

The present disclosure relates to a system for providing a software development environment, a method for providing a software development environment, and a non-transitory computer readable medium.

### BACKGROUND

Along with advances in technology pertaining to the Internet of Things (IOT), systems have been proposed for automatic control of various devices, sensors, and the like connected to a network in plants, factories, buildings, residences, and the like. For example, various systems (engineering systems) have been constructed in plants, factories, and the like, such as a distributed control system, a manufacturing execution system (MES), a plant information management system (PIMS), and an enterprise resource planning (ERP) system.

The development of software implemented in these engineering systems, such as applications, workflow, and programs, has been achieved using an apparatus installed in a plant, such as a programmable logic controller (PLC). Patent literature (PTL) 1, for example, proposes technology to support software development using a visual programming tool. Specifically, PTL 1 discloses the development of software by representing various processes, such as functions, collectively as an object and representing the relationships between processes by wires connecting the processes.

### CITATION LIST

### Patent Literature

PTL 1: JP 2020-42679 A

### SUMMARY

When numerous objects are combined to develop software using the technology in PTL 1, however, the overall picture of the software becomes harder to grasp as the number of combined objects increases. In other words, there is room for improvement in the convenience of the user interface of the software development environment.

It would be helpful to provide a system for providing a software development environment, a method for providing a software development environment, and a non-transitory computer readable medium that can improve the convenience of the user interface of a software development environment.

A system for providing a software development environment according to an embodiment is a system for providing a software development environment to develop software by combining a plurality of development components, the system including an information processing apparatus that includes a display and a controller, wherein
the display is configured to display a user interface on which the plurality of development components is placed,
the controller is configured to change a display form of each development component and display each development component on the display in accordance with a request to change a display magnification, and
each development component is displayed in a display form that includes less information when the display magnification is below a predetermined magnification than when the display magnification is equal to or greater than the predetermined magnification, and each development component is displayed in a display form that includes a corresponding icon regardless of the display magnification.

According to the system for providing a software development environment in an embodiment, an overview of software formed by a combination of a plurality of development components can become easier to grasp as a result of switching the display magnification. Each development component is displayed in a display form that includes less information when the display magnification is below a predetermined magnification than when the display magnification is equal to or greater than the predetermined magnification. Therefore, a reduction in visibility of information can be suppressed when information is reduced in size and displayed, for example. Furthermore, since each development component is displayed in a display form that includes the corresponding icon, regardless of the display magnification, the distinguishability of each development component can be improved by the icon. In other words, the user can easily learn what type of development component each development component is regardless of the display magnification. The convenience of the user interface of a software development environment can thus be improved by the system for providing a software development environment in an embodiment.

In an embodiment, each development component may be displayed in a display form that does not include a property pertaining to the development component when the display magnification is below a first threshold, and each development component may be displayed in a display form that includes the property when the display magnification is equal to or greater than the first threshold.

According to the system for providing a software development environment in an embodiment, each development component is thus displayed in a display form that does not include a property pertaining to the development component when the display magnification is below the first threshold. Therefore, a reduction in visibility of information can be suppressed when information is reduced in size and displayed, for example. Also, each development component is displayed in a display form that includes the property when the display magnification is equal to or greater than the first threshold. The distinguishability of each development component can therefore be further improved.

In an embodiment, each development component may be displayed in a display form that does not include a name of the development component when the display magnification is below a second threshold, each development component may be displayed in a display form that includes the name when the display magnification is equal to or greater than the second threshold, and the second threshold may be lower than the first threshold.

According to the system for providing a software development environment in an embodiment, each development component is thus displayed in a display form that does not include a name pertaining to the development component when the display magnification is below the second threshold. Therefore, a reduction in visibility of information can be suppressed when information is reduced in size and displayed, for example. Also, each development component is displayed in a display form that includes the name when the display magnification is equal to or greater than the second threshold. Information pertaining to each development component can therefore be learned more easily.

In an embodiment, the plurality of development components may include at least two development components that are associated with the same icon and are connected to the same destination development component, and
the at least two development components may be integrated by a corresponding integrated object and displayed when the display magnification is below a third threshold.

According to the system for providing a software development environment in an embodiment, the integrated object can be displayed to reduce the number of objects and prevent a reduction in visibility when the display magnification is low.

In an embodiment, the integrated object may be displayed in a display form that includes the number of integrated development components.

According to the system for providing a software development environment in an embodiment, the user can thus easily learn the number of integrated development components.

In an embodiment, an information amount of the property may be increased to be higher when the display magnification is equal to or greater than a fourth threshold than when the display magnification is below the fourth threshold, and the fourth threshold may be higher than the first threshold.

According to the system for providing a software development environment in an embodiment, the information amount of the property can thus be increased when the display magnification is greater than the fourth threshold and a sufficient area for displaying information is ensured. This enables the user to grasp the content of software more easily.

In an embodiment, the information amount of the property may be increased based on an operation history pertaining to the plurality of development components when the display magnification is equal to or greater than the fourth threshold.

According to the system for providing a software development environment in an embodiment, the viewability of properties with a high priority can thus be increased, improving convenience for the user. This configuration can also prevent program bugs and facilitate debugging.

In an embodiment, when a mouseover operation is performed on any development component among the plurality of development components, a property pertaining to the development component subjected to the mouseover operation may be displayed regardless of the display magnification.

According to the system for providing a software development environment in an embodiment, a property pertaining to the development component subjected to the mouseover operation is thus displayed regardless of the display magnification. The property of each development component can therefore be learned easily.

A method for providing a software development environment according to an embodiment is a method for providing a software development environment to develop software by combining a plurality of development components, the method including:
displaying a user interface on which the plurality of development components is placed; and
changing a display form of each development component and displaying each development component in accordance with a request to change a display magnification;
wherein each development component is displayed in a display form that includes less information when the display magnification is below a predetermined magnification than when the display magnification is equal to or greater than the predetermined magnification, and each development component is displayed in a display form that includes a corresponding icon regardless of the display magnification.

According to the method for providing a software development environment in an embodiment, an overview of software formed by a combination of a plurality of development components can become easier to grasp as a result of switching the display magnification. Each development component is displayed in a display form that includes less information when the display magnification is below a predetermined magnification than when the display magnification is equal to or greater than the predetermined magnification. Therefore, a reduction in visibility of information can be suppressed when information is reduced in size and displayed, for example. Furthermore, since each development component is displayed in a display form that includes the corresponding icon, regardless of the display magnification, the distinguishability of each development component can be improved by the icon. In other words, the user can easily learn what type of development component each development component is regardless of the display magnification. The convenience of the user interface of a software development environment can thus be improved by the method for providing a software development environment in an embodiment.

A non-transitory computer readable medium according to an embodiment is a non-transitory computer readable medium storing a program, for providing a software development environment, configured to cause a processor to execute operations including:
displaying a user interface on which a plurality of development components is placed; and
changing a display form of each development component and displaying each development component in accordance with a request to change a display magnification;
wherein each development component is displayed in a display form that includes less information when the display magnification is below a predetermined magnification than when the display magnification is equal to or greater than the predetermined magnification, and each development component is displayed in a display form that includes a corresponding icon regardless of the display magnification.

According to the non-transitory computer readable medium storing a program for providing a software development environment in an embodiment, an overview of software formed by a combination of a plurality of development components can become easier to grasp as a result of switching the display magnification. Each development component is displayed in a display form that includes less information when the display magnification is below a predetermined magnification than when the display magnification is equal to or greater than the predetermined magnification. Therefore, a reduction in visibility of information can be suppressed when information is reduced in size and displayed, for example. Furthermore, since each development component is displayed in a display form that includes the corresponding icon, regardless of the display magnification, the distinguishability of each development component can be improved by the icon. In other words, the user can easily learn what type of development component each development component is regardless of the display magnification. In this way, the convenience of the user interface of a software development environment can be improved by the non-transitory computer readable medium that stores a program for providing a software development environment in an embodiment.

According to the present disclosure, a system for providing a software development environment, a method for providing a software development environment, and a non-transitory computer readable medium that can improve technology related to the user interface of a software development environment can be provided.

### BRIEF DESCRIPTION OF THE DRAWINGS

In the accompanying drawings:
FIG. 1 is a functional block diagram of a system for providing a software development environment according to an embodiment of the present disclosure;
FIG. 2 is a diagram illustrating a user interface in the system for providing a software development environment according to an embodiment of the present disclosure;
FIG. 3 is a diagram illustrating a trigger selection dialog box in the system for providing a software development environment according to an embodiment of the present disclosure;
FIG. 4 is a diagram illustrating a user interface in which the development component selected in the trigger selection dialog box is placed;
FIG. 5 is a diagram illustrating a user interface on which a plurality of development components is placed;
FIG. 6 is a flowchart illustrating a method for providing a software development environment according to an embodiment of the present disclosure;
FIG. 7 is a diagram illustrating an overview of operations in the method for providing a software development environment according to an embodiment of the present disclosure;
FIG. 8 is a diagram illustrating an overview of operations in the method for providing a software development environment according to an embodiment of the present disclosure;
FIG. 9 is a diagram illustrating a setting dialog box in the system for providing a software development environment according to an embodiment of the present disclosure;
FIG. 10 is a diagram illustrating operation of an overview screen in the system for providing a software development environment according to an embodiment of the present disclosure;
FIG. 11 is a diagram illustrating operation of an overview screen in the system for providing a software development environment according to an embodiment of the present disclosure;
FIG. 12 is a diagram illustrating operation of an overview screen in the system for providing a software development environment according to an embodiment of the present disclosure;
FIG. 13 is a diagram illustrating an example in which an integrated object is displayed in the system for providing a software development environment according to an embodiment of the present disclosure; and
FIG. 14 is a diagram illustrating an example display during a mouseover in the system for providing a software development environment according to an embodiment of the present disclosure.

### DETAILED DESCRIPTION

A system 10 for providing a software development environment according to an embodiment of the present disclosure is described below with reference to the drawings.

Identical or equivalent portions in the drawings are labeled with the same reference signs. In the explanation of the present embodiment, a description of identical or equivalent portions is omitted or simplified as appropriate.

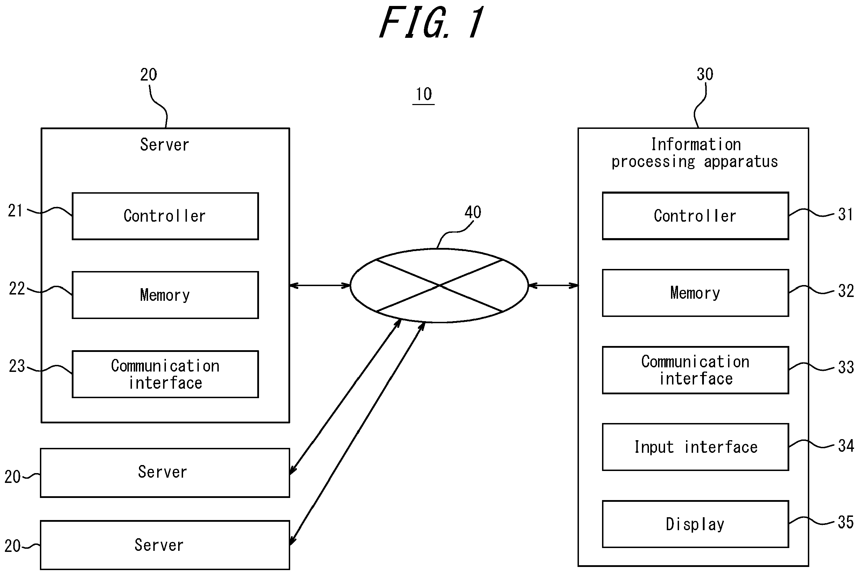

An overview and configuration of the system 10 for providing a software development environment according to the present embodiment are described with reference to FIGS. 1 to 3.

The system 10 for providing a software development environment according to the present embodiment includes a plurality of servers 20 and an information processing apparatus 30. The servers 20 and the information processing apparatus 30 are communicably connected to a network 40, such as a mobile communication network and/or the Internet. Each server 20 is, for example, installed in a data center or the like. Each server 20 is, for example, a server belonging to a cloud computing system or another computing system. In overview, the system 10 for providing a software development environment provides a user with an environment, for example on the cloud, for developing software by combining a plurality of development components. The user operates the information processing apparatus 30 to access the cloud, which is formed by the plurality of servers 20, using a web browser on the information processing apparatus 30, for example. The user can then develop software by combining a plurality of development components on an interface displayed by the web browser. The system 10 for providing a software development environment in FIG. 1 includes three servers 20, but this example is not limiting. The system 10 for providing a software development environment may include fewer than three servers 20 or may include four or more servers 20. The number of servers 20 may also be one.

The configurations of the server 20 and the information processing apparatus 30 according to the present embodiment are described below.

As illustrated in FIG. 1, the server 20 includes a controller 21, a memory 22, and a communication interface 23.

The controller 21 includes at least one processor, at least one dedicated circuit, or a combination thereof. The processor may, for example, be a general-purpose processor, such as a central processing unit (CPU) or graphics processing unit (GPU), or a dedicated processor specialized for particular processing. The dedicated circuit may, for example, be a field-programmable gate array (FPGA) or an application specific integrated circuit (ASIC). The controller 21 executes processing related to operation of the server 20 while controlling each component of the server 20.

The memory 22 includes at least one semiconductor memory, at least one magnetic memory, at least one optical memory, or a combination of at least two of these. The semiconductor memory is, for example, random access memory (RAM) or read only memory (ROM). The RAM is, for example, static random access memory (SRAM) or dynamic random access memory (DRAM). The ROM is, for example, electrically erasable programmable read only memory (EEPROM). The memory 22 functions as, for example, a main memory, an auxiliary memory, or a cache memory. The memory 22 stores data to be used for operation of the server 20 and data resulting from operation of the server 20.

The communication interface 23 includes at least one interface for communication with an external destination. The interface for communication may be an interface for wired communication or wireless communication. In the case of wired communication, the interface for communication may be a local area network (LAN) interface or a universal serial bus (USB), for example. In the case of wireless communication, the interface for communication may be an interface conforming to a mobile communication standard, such as Long Term Evolution (LTE), 4th Generation (4G), or 5th Generation (5G), or an interface conforming to short-range wireless communication such as Bluetooth^{®} (Bluetooth is a registered trademark in Japan, other countries, or both). The communication interface 23 receives data for use in operation of the server 20 and transmits data resulting from operation of the server 20.

The functions of the server 20 are implemented by a processor corresponding to the controller 21 executing a program according to the present embodiment. In other words, the functions of the server 20 are implemented by software. The program causes a computer to function as the server 20 by causing the computer to execute the operations of the server 20. In other words, the computer functions as the server 20 by executing the operations of the server 20 in accordance with the program.

The program according to the present embodiment can be recorded on a computer readable recording medium. Computer readable recording media include non-transitory computer readable recording media, examples of which are a magnetic recording apparatus, an optical disc, a magneto-optical recording medium, and a semiconductor memory. The program is, for example, distributed by the sale, transfer, or lending of a portable recording medium such as a digital versatile disk (DVD) or a compact disk read only memory (CD-ROM) on which the program is recorded. The program may also be distributed by storing the program in the storage of an external server and transmitting the program from the external server to another computer. The program may also be provided as a program product.

A portion or all of the functions of the server 20 may be implemented by a dedicated circuit corresponding to the controller 21. In other words, a portion or all of the functions of the server 20 may be implemented by hardware.

The information processing apparatus 30 includes a controller 31, a memory 32, a communication interface 33, an input interface 34, and a display 35.

The controller 31 includes at least one processor, at least one dedicated circuit, or a combination thereof. The processor may be a general-purpose processor, such as a CPU or GPU, or a dedicated processor specialized for particular processing. The dedicated circuit is, for example, an FPGA or an ASIC. The controller 31 executes processing related to operation of the information processing apparatus 30 while controlling each component of the information processing apparatus 30.

The memory 32 includes at least one semiconductor memory, at least one magnetic memory, at least one optical memory, or a combination of at least two of these. The semiconductor memory is, for example, RAM or ROM. The RAM is, for example, SRAM or DRAM. The ROM is, for example, EEPROM. The memory 32 functions as, for example, a main memory, an auxiliary memory, or a cache memory. The memory 32 stores data to be used for operation of the information processing apparatus 30 and data resulting from operation of the information processing apparatus 30.

The communication interface 33 includes at least one interface for communication with an external destination. The interface for communication may be an interface for wired communication or wireless communication. In the case of wired communication, the interface for communication may be a LAN interface or a USB, for example. In the case of wireless communication, the interface for communication may be an interface conforming to a mobile communication standard, such as LTE, 4G, or 5G, or an interface conforming to short-range wireless communication such as Bluetooth^{®}. The communication interface 33 receives data for use in operation of the information processing apparatus 30 and transmits data resulting from operation of the information processing apparatus 30.

The input interface 34 includes at least one interface for input. The interface for input is, for example, a physical key, a capacitive key, a pointing device, or a touchscreen integrally provided with a display. The input interface 34 receives an operation for inputting data used in operation of the information processing apparatus 30. Instead of being provided in the information processing apparatus 30, the input interface 34 may be connected to the information processing apparatus 30 as an external input device. Any appropriate connection method can be used, such as USB, High-Definition Multimedia Interface (HDMI^{®}) (HDMI is a registered trademark in Japan, other countries, or both), or Bluetooth^{®}.

The display 35 includes at least one interface for display output. The interface for output is, for example, a display. The display may, for example, be a liquid crystal display (LCD) or an organic electro luminescence (EL) display. The display 35 outputs data resulting from operation of the information processing apparatus 30 by displaying the data. Instead of being provided in the information processing apparatus 30, the display 35 may be connected to the information processing apparatus 30 as an external output device. Any appropriate connection method can be used, such as USB, HDMI^{®}, or Bluetooth^{®}.

The functions of the information processing apparatus 30 are implemented by a processor corresponding to the controller 31 executing a program according to the present embodiment. In other words, the functions of the information processing apparatus 30 are implemented by software. The program causes a computer to function as the information processing apparatus 30 by causing the computer to execute the operations of the information processing apparatus 30. In other words, the computer functions as the information processing apparatus 30 by executing the operations of the information processing apparatus 30 in accordance with the program.

The computer in the present embodiment temporarily stores, in the main memory, the program recorded on a portable recording medium or transferred from a server, for example. The computer uses a processor to read the program stored in the main memory and executes processing with the processor in accordance with the read program. The computer may read the program directly from the portable recording medium and execute processing in accordance with the program. Each time the program is received from an external server, the computer may sequentially execute processing in accordance with the received program. Processing may be executed by an application service provider (ASP) type of service that implements functions only via execution instructions and result acquisition, without transmission of the program from an external server to the computer. Examples of the program include an equivalent to the program represented as information provided for processing by an electronic computer. For example, data that is not a direct command for a computer but that has the property of specifying processing by the computer corresponds to the "equivalent to the program".

A portion or all of the functions of the information processing apparatus 30 may be implemented by a dedicated circuit corresponding to the controller 31. In other words, a portion or all of the functions of the information processing apparatus 30 may be implemented by hardware.

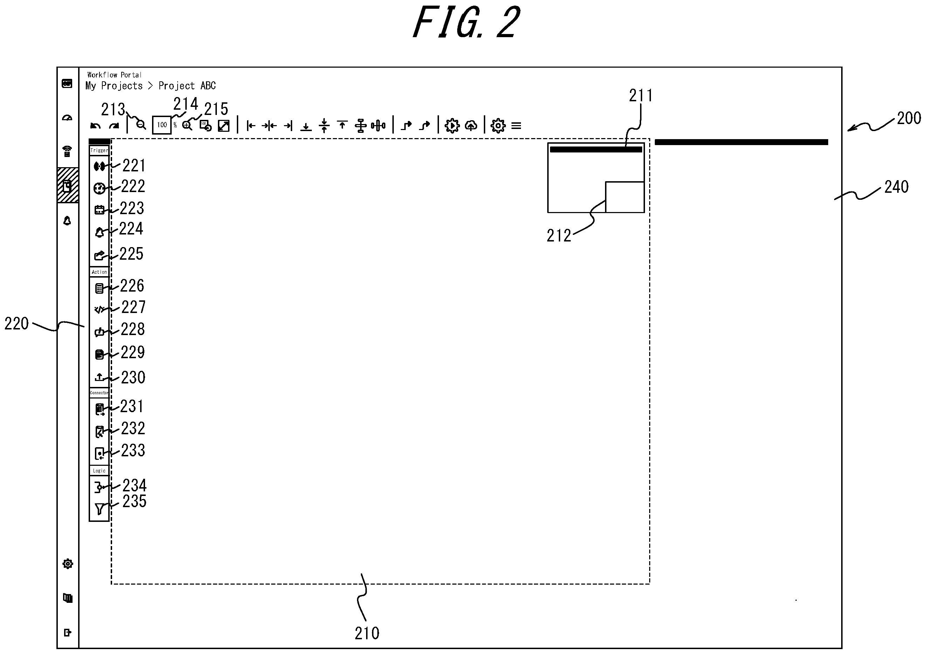

FIG. 2 illustrates an example of a user interface displayed on the display 35 of the information processing apparatus 30. The user operates the input interface 34 of the information processing apparatus 30 to access the server 20 via a web browser, for example. The user then develops software by combining a plurality of development components on the user interface displayed in the web browser. It is thus not necessary in the present embodiment to install, on the information processing apparatus 30, an application or the like that is specialized for the system 10 for providing a software development environment. In other words, as long as the information processing apparatus 30 includes a web browser application, the user can develop software by connecting to the server 20 from the information processing apparatus 30.

The user interface 200 illustrated in FIG. 2 includes a builder area 210, a development component selection area 220, and a property area 240. The builder area 210 is an area for a plurality of development components to be placed, connected, and the like. The user develops software by combining a plurality of development components in the builder area 210. The builder area 210 includes an overview screen 211. The overview screen 211 displays an overview of the placed development components using a reduced-size screen. In other words, the overview screen 211 is a screen displaying all of the placed development components at a reduced size. The range displayed by the builder area 210 (display area) is indicated in the overview screen 211 by a display range frame 212. The display area of the builder area 210 can be expanded or reduced by magnification adjustment tools 213 to 215. The development component selection area 220 is an area for displaying a plurality of development components 221 to 235 that are placeable in the builder area 210. The property area 240 is an area for displaying and editing setting information and the like pertaining to a development component selected in the builder area 210.

The development components in the present embodiment are classified into types such as trigger, action, connector, and logic. The development components 221 to 225 illustrated in FIG. 2 are classified as triggers. The development components classified as triggers are components pertaining to the occurrence of some sort of event, such as the acquisition of a sensor value from a sensor such as a temperature sensor, humidity sensor, or pressure sensor, the elapse of a predetermined length of time, or the occurrence of a predetermined alarm on a device. The development components 226 to 230 are classified as actions. The development components classified as actions are components pertaining to an operation, processing, or the like, such as calculation processing, notification, or uploading of data, that is performed when an event occurs. The development components 231 to 233 are classified as connectors. The development components classified as connectors are components pertaining to information processing with an external resource, such as connection to a database, device, or the like and the addition, updating, deletion, etc. of information thereon. The development components 234 to 235 are classified as logic. The development components classified as logic are components pertaining to the logical sum, filtering, or the like of input information. The user manipulates a mouse pointer or the like to develop software on the user interface 200. For example, the user manipulates a mouse pointer to select a desired development component from the development component selection area 220 and then places, connects, etc. the selected, desired development component in the builder area 210.

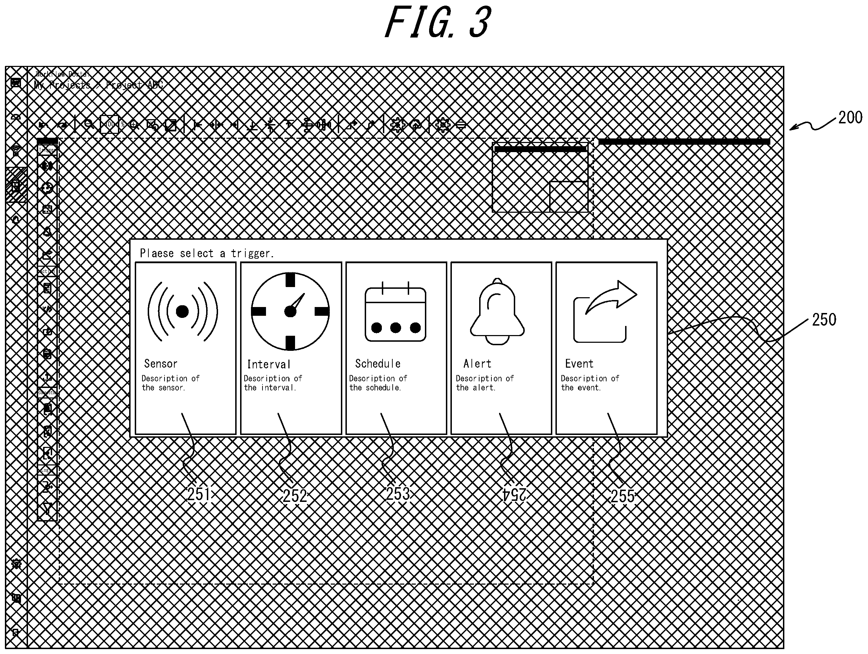

FIG. 3 is a diagram illustrating a trigger selection dialog box in the system for providing a software development environment according to an embodiment of the present disclosure. A trigger selection dialog box 250 illustrated in FIG. 3 is displayed when no development component has been placed in the builder area 210. The trigger selection dialog box 250 is a dialog screen for the user to select a development component to place first in the builder area 210. In other words, the user is prompted by the trigger selection dialog box 250 to perform the first operation necessary for software development. The user can thereby easily start developing software. The trigger selection dialog box 250 includes development components 251 to 255, which respectively correspond to the development components 221 to 225 of the development component selection area 220.

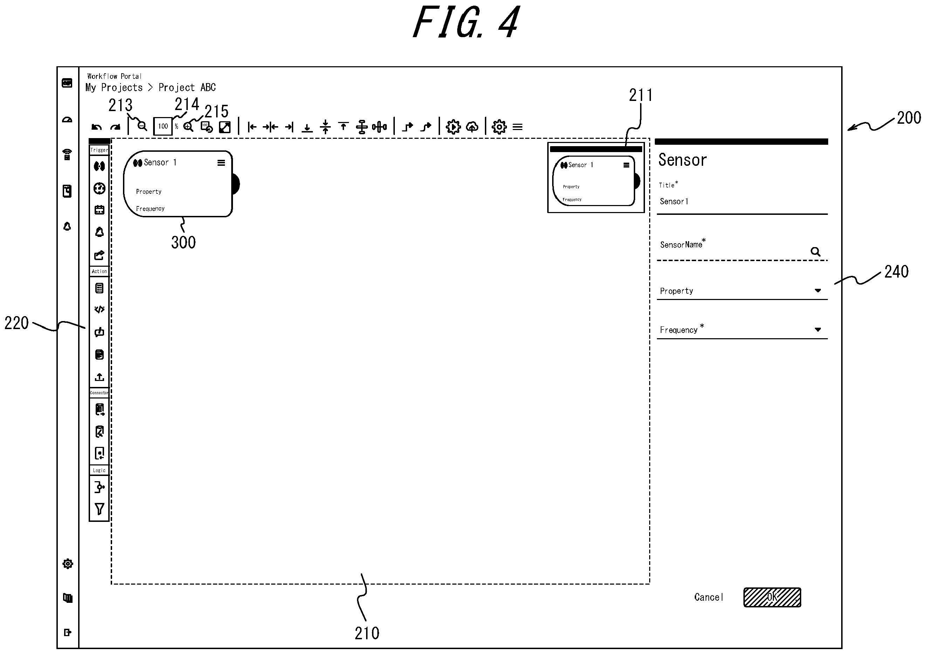

FIG. 4 is a diagram illustrating a user interface in which the development component selected in the trigger selection dialog box 250 is placed in the builder area 210. For example, suppose that the user has operated a mouse pointer and selected the development component 251 pertaining to a sensor in the trigger selection dialog box 250. In this case, as illustrated in FIG. 4, a development component 300 corresponding to a sensor is placed in the builder area 210. Properties are associated with the development component 300. The properties include a variety of variables, conditional expressions, setting information, and the like pertaining to the development component. By selecting and setting properties such as various settings, variables, conditional expressions, and so forth from pulldown menus or the like in the property area 240, the user defines various actions and the like for each development component. In other words, the user can develop software by placing and connecting development components and setting the setting information, with no need whatsoever for writing program code.

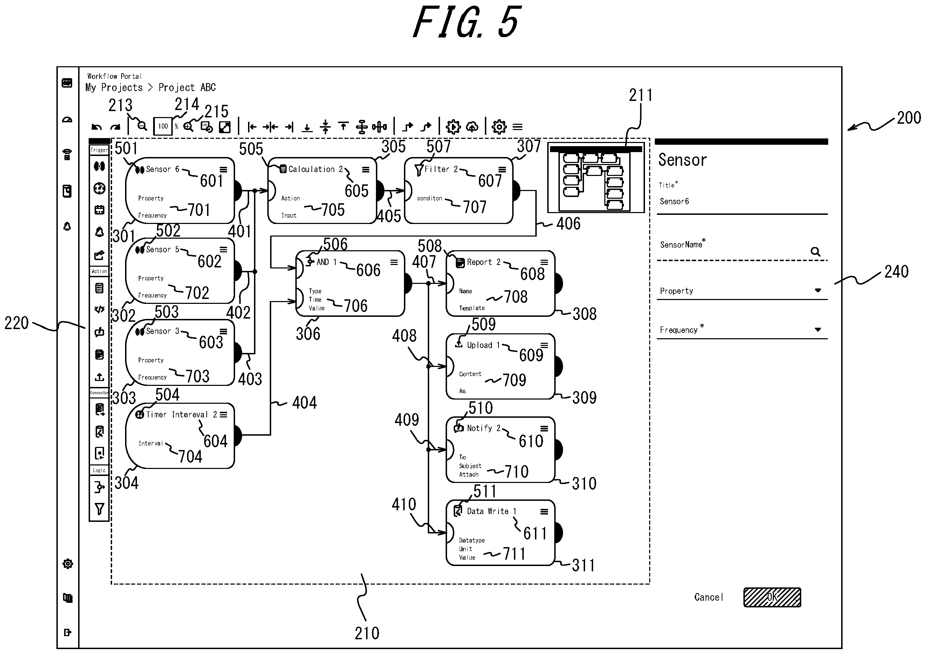

FIG. 5 is an example in which a plurality of development components has been placed and connected in the builder area 210. In FIG. 5, development components 301 to 311 have been placed and are connected by links 401 to 410. The link 401 indicates that the output of the development component 301 is the input of the development component 305. The link 402 indicates that the output of the development component 302 is the input of the development component 305. The link 403 indicates that the output of the development component 303 is the input of the development component 305. The link 404 indicates that the output of the development component 304 is the input of the development component 306. The link 405 indicates that the output of the development component 305 is the input of the development component 307. The link 406 indicates that the output of the development component 307 is the input of the development component 306. The link 407 indicates that the output of the development component 306 is the input of the development component 308. The link 408 indicates that the output of the development component 306 is the input of the development component 309. The link 409 indicates that the output of the development component 306 is the input of the development component 310. The link 410 indicates that the output of the development component 306 is the input of the development component 311. Properties are associated with each of the development components 301 to 311.

As illustrated in FIG. 5, the development components 301 to 311 are displayed in a display form that includes the corresponding icons 501 to 511, names 601 to 611, and properties 701 to 711. The icons 501 to 511 are associated with respective icons displayed in the development component selection area 220. The names 601 to 611 are identification information for uniquely identifying each development component. The properties 701 to 711 are setting information associated with the respective development components. In this way, the name and properties of each development component are displayed in the user interface 200 illustrated as an example in FIG. 5, thereby enabling the user to gain a bird's-eye view of the setting information and the like of a plurality of development components. Here, the display area of the builder area 210 can be enlarged or reduced by the magnification adjustment tools 213 to 215. When each development component is reduced in size and displayed, however, information pertaining to the name and properties also ends up reduced in size and could suffer reduced visibility. To address this issue, the system 10 for providing a software development environment according to an embodiment of the present disclosure presents information corresponding to the display magnification to suppress a reduction in visibility using the operations illustrated below.

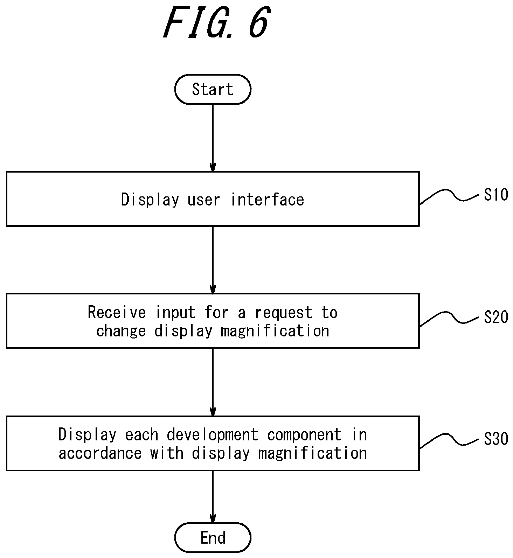

FIG. 6 is a flowchart illustrating operations by the system 10 for providing a software development environment, i.e. an example of a method for providing a software development environment.

First, the controller 3 1 of the information processing apparatus 30 displays the user interface 200 on the display 35 at an initially set display magnification (step S10). The initially set display magnification is, for example, 100%. FIG. 5 is an example of the user interface 200 displayed in this case. As described above, the user interface 200 includes the builder area 210 and the development component selection area 220, which displays a plurality of development components placeable in the builder area 210. Here, a request to display the user interface 200 is based on an input operation from the user. For example, the controller 31 uses the input interface 34 to receive an input operation by the user on the web browser. Upon receiving the input operation, the controller 31 communicates with the server 20 via the communication interface 33 and receives data pertaining to the user interface 200. The controller 31 then displays the user interface 200 on the display 35 based on the data. An authentication process or the like pertaining to the user may be performed by the server 20 and the information processing apparatus 30 as appropriate.

Next, the input interface 34 receives input for a request to change the display magnification (change request) (step S20). The change request is received based on an operation on the magnification adjustment tools 213 to 215. For example, the input interface 34 receives a click on the magnification adjustment tool 213. This operation corresponds to a change request to reduce the display magnification by a predetermined value. The predetermined value is, for example, 1%. Accordingly, clicking 10 times on the magnification adjustment tool 213, for example, reduces the display magnification by 10%. For example, the input interface 34 receives a click on the magnification adjustment tool 215. This operation corresponds to a change request to increase the display magnification by a predetermined value. The predetermined value is, for example, 1%. Accordingly, clicking 10 times on the magnification adjustment tool 215, for example, increases the display magnification by 10%. For example, the input interface 34 receives input of a number to the magnification adjustment tool 214. This operation corresponds to a change request to change the display magnification to the inputted numerical value.

When the change request is received, the controller 31 displays each development component in accordance with the display magnification on the display 35 (step S30). Here, the controller 31 displays each development component on the display 35 in a display form that includes the corresponding icon, regardless of the display magnification. On the other hand, the controller 31 displays each development component in a display form that includes less information when the display magnification is below a predetermined magnification than when the display magnification is equal to or greater than the predetermined magnification.

Specifically, each development component is displayed in a display form that does not include the properties pertaining to the development component when the display magnification is below a first threshold. Conversely, each development component is displayed in a display form that includes the properties when the display magnification is equal to or greater than the first threshold. The first threshold is, for example, 90%. Each development component is displayed in a display form that does not include the name pertaining to the development component when the display magnification is below a second threshold. Conversely, each development component is displayed in a display form that includes the name when the display magnification is equal to or greater than the second threshold. The second threshold is, for example, 70%.

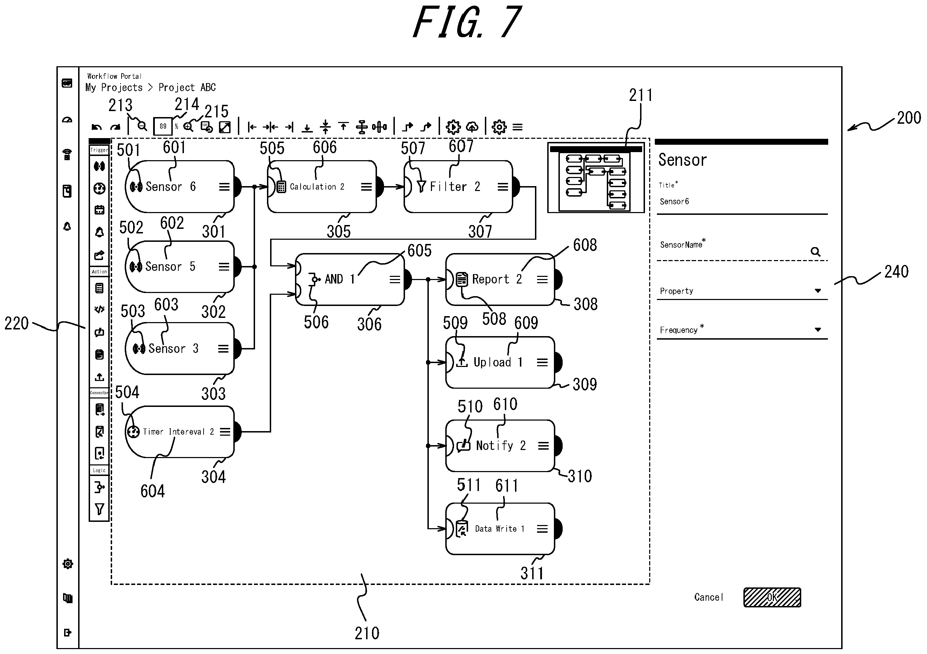

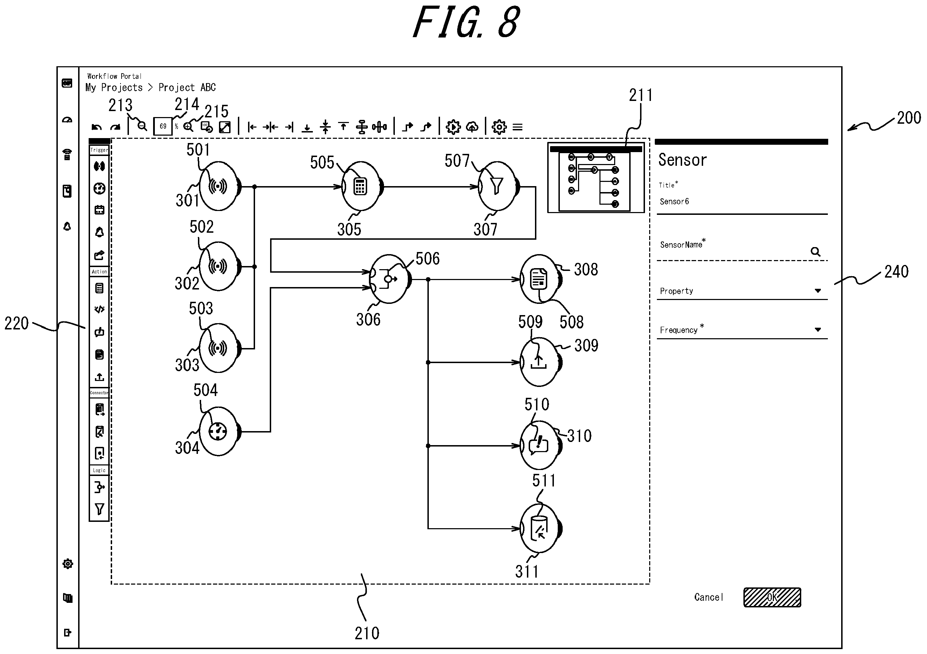

FIGS. 7 and 8 are diagrams illustrating an overview of these operations. FIGS. 7 and 8 are display examples for the cases of the display magnification being 89% and 69% respectively. When the display magnification is 89%, the display magnification is below the first threshold and is equal to or greater than the second threshold. As illustrated in FIG. 7, the development components 301 to 311 are therefore displayed in a display form that includes the respective icons 501 to 511 and names 601 to 611 pertaining to the development components. On the other hand, the development components 301 to 311 do not include the properties 701 to 711 pertaining to the development components.

When the display magnification is 69%, the display magnification is below the first threshold and is below the second threshold. As illustrated in FIG. 8, the development components 301 to 311 are therefore displayed in a display form that includes the icons 501 to 511 pertaining to the development components. On the other hand, the development components 301 to 311 do not include the names 601 to 611 and properties 701 to 711 pertaining to the development components.

According to the system 10 for providing a software development environment in the present embodiment, an overview of software formed by a combination of a plurality of development components can become easier to grasp as a result of switching the display magnification. Each development component is displayed in a display form that includes less information when the display magnification is below a predetermined magnification than when the display magnification is equal to or greater than the predetermined magnification. Therefore, a reduction in visibility of information can be suppressed when information is reduced in size and displayed, for example. Furthermore, since each development component is displayed in a display form that includes the corresponding icon, regardless of the display magnification, the user can easily learn what type of development component each development component is, based on the icon. In other words, the distinguishability of each development component can be improved by the icon of the development component being displayed regardless of the display magnification.

In greater detail, when the display magnification is below 90%, for example, each development component is displayed in a display form that does not include the properties pertaining to the development component. Conversely, when the display magnification is equal to or greater than 90%, each development component is displayed in a display form that includes the properties. When the display magnification is below 70%, each development component is displayed in a display form that does not include the name pertaining to the development component. Conversely, when the display magnification is equal to or greater than 70%, each development component is displayed in a display form that includes the name. By a plurality of thresholds being set in this way, the information amount of each displayed development component can be ensured in conjunction with each display magnification, and a reduction in visibility due to the display magnification can be prevented.

Although the present disclosure is based on embodiments and drawings, it is to be noted that various changes and modifications will be apparent to those skilled in the art based on the present disclosure. Therefore, such changes and modifications are to be understood as included within the scope of the present disclosure. For example, the functions and the like included in the components, steps, and the like may be reordered in any logically consistent way. Furthermore, components, steps, and the like may be combined into one or divided.

For example, two thresholds are provided in the above embodiment, the first threshold and the second threshold, and the display form of each development component is switched among three patterns corresponding to the level of display magnification. Specifically, the display form of each development component in the example illustrated in the above embodiment is switched among three patterns, namely a display form that includes only the icon, a display form that includes the icon and the name, and a display form that includes the icon, name, and properties. However, this example is not limiting. Only the first threshold or only the second threshold, for example, may be provided as the threshold. In this case, the display form of each development component may be switched between two patterns. In other words, the threshold may be only the first threshold, for example. The display form of each development component may be switched between two patterns in this case, namely a display form that includes the icon and the name, and a display form that includes the icon, the name, and the properties. The threshold may be only the second threshold, for example. The display form of each development component may be switched between two patterns in this case, such as a display form that includes only the icon, and a display form that includes the icon, the name, and the properties.

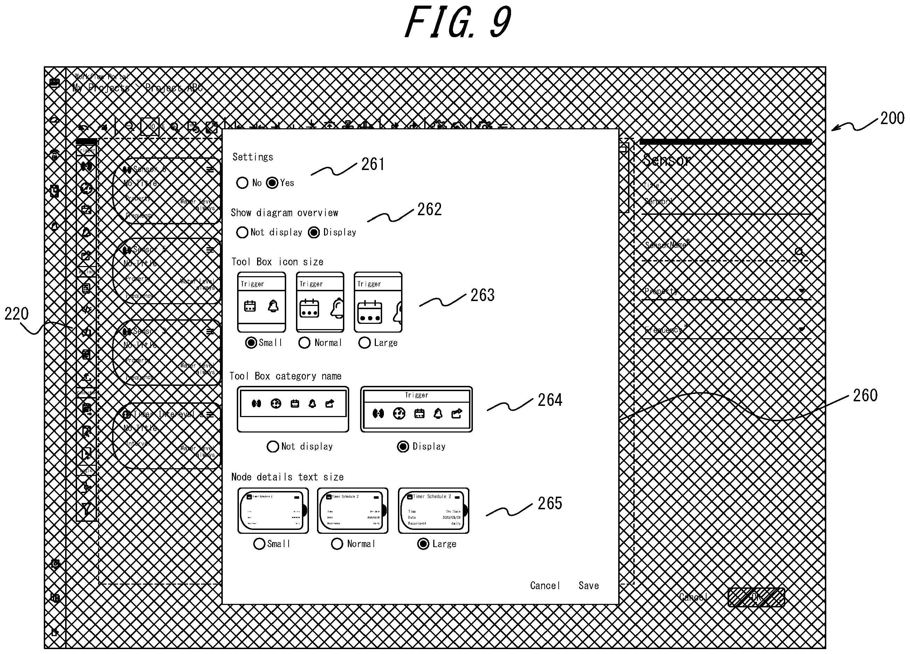

Various settings pertaining to the user interface 200, such as the font size in the user interface 200, may be changeable by the user, for example. These settings may, for example, be set by a setting dialog box. FIG. 9 is a diagram illustrating a setting dialog box 260 in the system 10 for providing a software development environment according to an embodiment of the present disclosure. The setting dialog box includes setting items 261 to 265. The setting item 261 is an item for setting whether to display the trigger selection dialog box. When "Yes" is selected on the setting item 261, the trigger selection dialog box is displayed. On the other hand, when "No" is selected on the setting item 261, the trigger selection dialog box is not displayed. The setting item 262 is an item for setting whether to display the overview screen. When "Display" is selected on the setting item 262, the overview screen is displayed in the builder area. Conversely, when "Not display" is selected on the setting item 262, the overview screen is not displayed. The setting item 263 is an item for setting the size of the icons in the development component selection area 220. Here, three different sizes can be set. The setting item 264 is an item for setting whether to display category names in the development component selection area 220. When "Display" is selected on the setting item 264, the category names are displayed in the development component selection area 220. Conversely, when "Not display" is selected on the setting item 264, the category names are not displayed in the development component selection area 220. The setting item 265 is an item for setting the font size of the name and properties of each development component. Here, three different sizes can be set. The visibility of the user interface 200 can be increased by appropriate adjustment of the setting items in accordance with the size and resolution of the display the user is using, the user's eyesight, and the like. A portion of the information can also be hidden, for example by hiding the category names in the development component selection area 220, in accordance with the user's skill level to enlarge the builder area 210 and improve the operability, convenience, and the like during development.

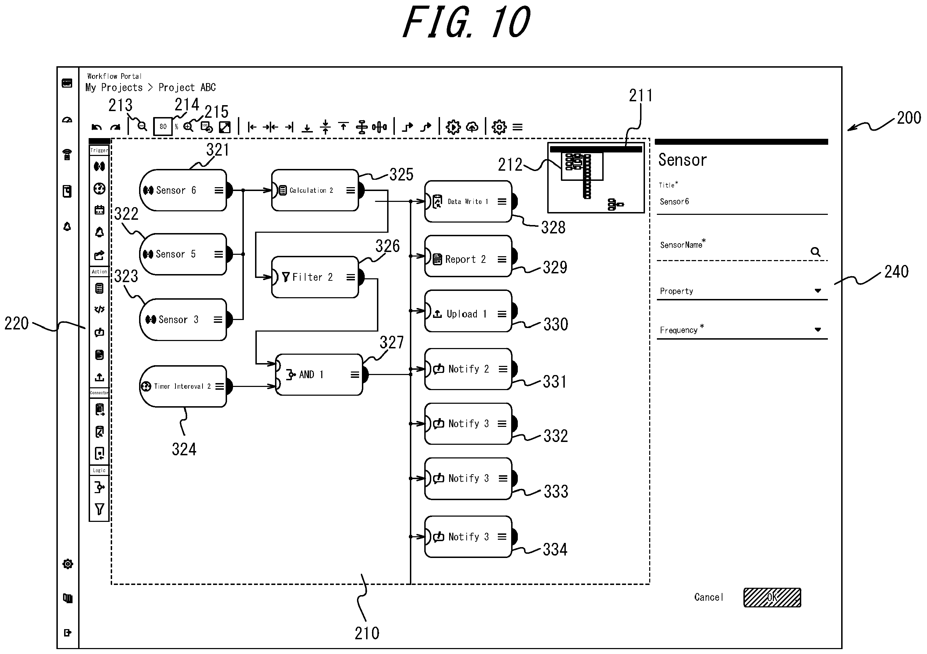

When the number of development components is large, setting the overview screen to be displayed by the setting item 262 can improve operability of the user interface 200. FIGS. 10 to 12 illustrate examples of operations with the overview screen. In the example in FIG. 10, the display magnification is set to 80%, and the development components 321 to 343 have been placed. While the development components 321 to 334 are displayed in the display example of FIG. 10, the remaining development components 335 to 343 are outside of the display area and therefore are not displayed in the builder area 210. As described above, all of the placed development components are displayed at a reduced size on the overview screen 211. This can prevent the development components not displayed in the builder area 210 from being overlooked. Furthermore, the display area displayed by the builder area 210 is indicated by the display range frame 212, enabling the user to easily grasp which portion is being displayed in the builder area 210.

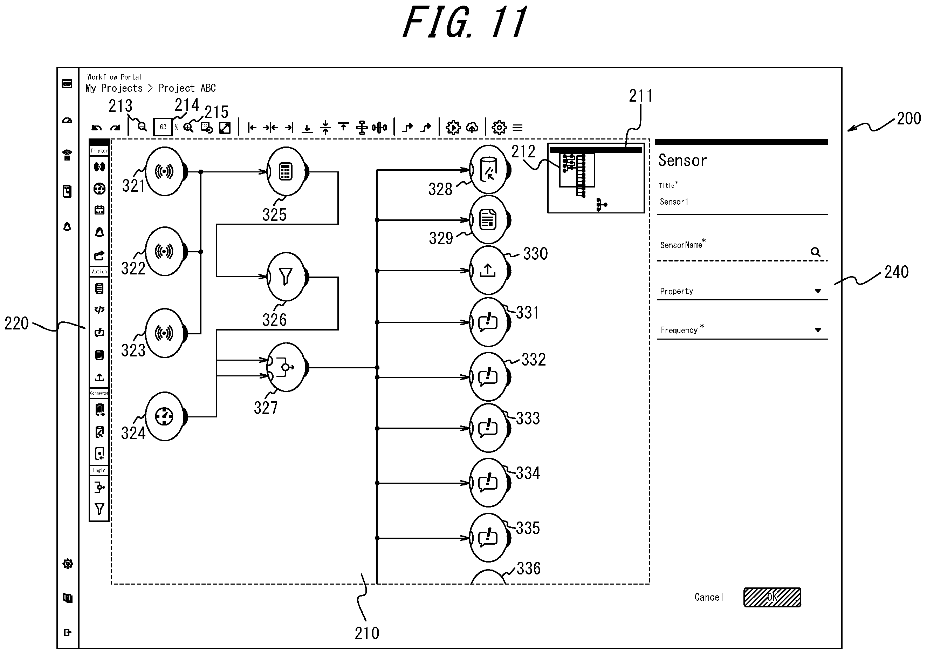

FIG. 11 is an example in which the display magnification of FIG. 10 is reduced to 63% for display. As illustrated in FIG. 11, when the number of placed development components is large, it may not be possible to display all of the development components in the builder area 210 even when the display magnification is below the second threshold. As described above, all of the placed development components are displayed at a reduced size on the overview screen 211 in this case as well. This can prevent the development components not displayed in the builder area 210 from being overlooked. Furthermore, the display area displayed by the builder area 210 is indicated by the display range frame 212, enabling the user to easily grasp which portion is being displayed in the builder area 210.

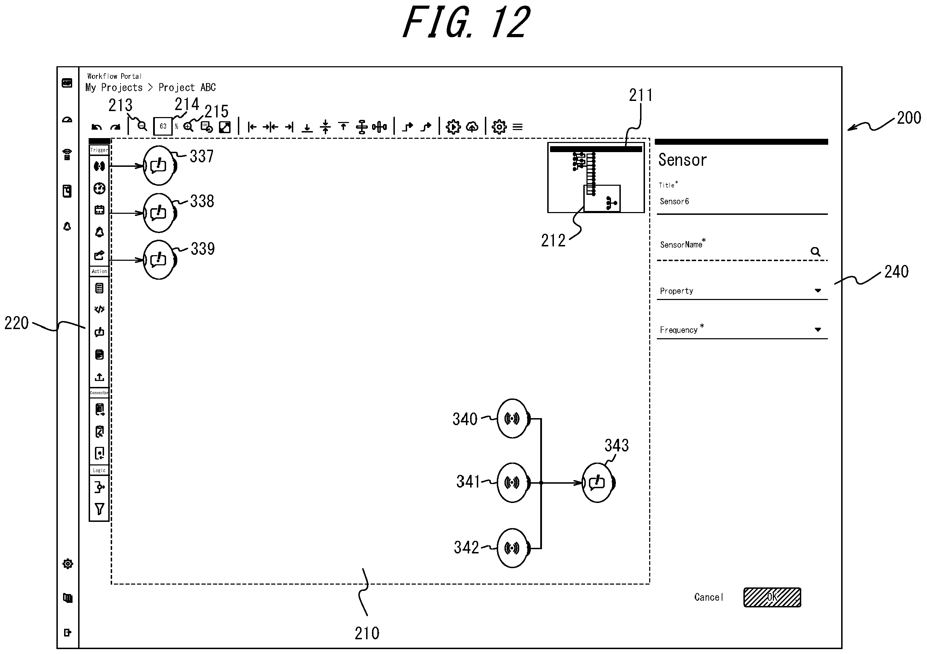

The position of the display range frame 212 can also be changed based on user operation, and the display area of the builder area 210 can be changed by this operation. The user can change the position of the display range frame 212 by a click, drag-and-drop, or the like on any location in the overview screen 211. FIG. 12 illustrates a display example for the case of the display range frame 212 being changed to the area where the development components 340 to 343 are located. Such a change in the display position on the overview screen 211 enables easy and quick switching so that the development components that the user wishes to view or edit are displayed in the builder area 210. In other words, the overview screen 211 enables quick access to any location while displaying an overview of the software.

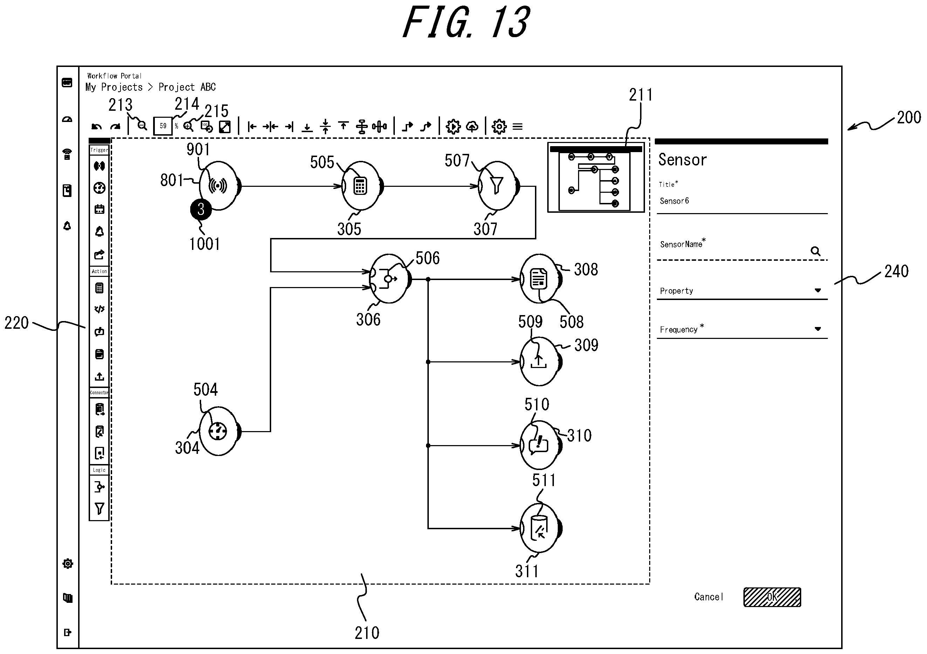

When a plurality of development components placed in the builder area 210 includes a plurality of development components of the same type, and the display magnification is below a third threshold, the development components of the same type may be displayed by an object that integrates a plurality of development components (integrated object). The third threshold is lower than the second threshold and may, for example, be 60%. In other words, a plurality of development components of the same type may be displayed by an integrated object instead of by separate objects when the display magnification is below the third threshold. The development components of the same type are development components associated with the same icon and connected to the same destination development component. For example, the icons of the development components 301, 302, 303 placed in the builder area 210 of FIG. 8, described above, are all the same icon (an icon pertaining to a sensor). The development components 301, 302, 303 are all connected to the development component 305. That is, the development components 301, 302, 303 are development components connected to the same destination development component. Accordingly, when the display magnification is below the third threshold, these development components may be displayed by an integrated object. FIG. 13 illustrates an example of the case of displaying these development components by an integrated object. In FIG. 13, the display magnification is 59%, which is below the third threshold. In this case, the development components 301, 302, 303 in FIG. 8 can be replaced by an integrated object 801, as illustrated in FIG. 13. The integrated object 801 is displayed in a form that includes an icon 901 to facilitate identification of the type of the integrated development components. Displaying the integrated object 801 this way reduces the number of objects in the builder area 210 and can prevent a reduction in visibility when the display magnification is low (below the third threshold).

The integrated object may be displayed in a display form that includes the number of integrated development components. The integrated object 801 in FIG. 13 includes a badge 1001. The badge is an object that displays the number of integrated development components. In FIG. 13, three objects are integrated, i.e. the development components 301, 302, 303. The badge therefore indicates "3". The integrated object 801 is displayed in a display form with the badge 1001 attached thereto. The user can thereby easily learn the number of integrated development components.

In the above embodiment, the properties 701 to 711 displayed when the display magnification is equal to or greater than the first threshold may be a portion of all of the settable information for the development components 301 to 311. In other words, the properties may be only a portion of information selected from among all settable information pertaining to the plurality of development components. Limiting the displayed properties to a portion of information in this way enables the user to easily recognize an overview of the software. Furthermore, the information amount of the properties, such as the number of items of the properties, the number of display characters, and the number of significant digits, may change in accordance with display magnification. Specifically, the information amount of the properties may be increased to be higher when the display magnification is equal to or greater than a fourth threshold than when the display magnification is below the fourth threshold. The fourth threshold is higher than the second threshold and may, for example, be 110%. The information amount of the properties can thus be increased when the display magnification is large and a sufficient area for displaying information is ensured. This enables the user to grasp the content of software more easily.

The properties to be added when the display magnification reaches the fourth threshold may be specifiable by the user. The properties to be added when the display magnification reaches the fourth threshold may also be based on an operation history pertaining to the plurality of development components. In other words, the information amount of the properties may be increased based on an operation history pertaining to the plurality of development components when the display magnification is equal to or greater than the fourth threshold. The operation history pertaining to the plurality of display components includes a history of operations to change the properties pertaining to each development component, for example. Based on the history of past operations to change the properties, a frequently changed property, recently changed property, or the like may, for example, become a property to be added when the display magnification reaches the fourth threshold. The properties to be added when the display magnification reaches the fourth threshold may also be determined by machine learning based on an operation history pertaining to the plurality of development components. The correlation between the history of revisions to the setting information by the user and the probability of occurrence of bugs may be used in the machine learning. Any appropriate algorithm for machine learning may be used, such as a convolutional neural network (CNN), a recurrent neural network (RNN), or deep learning. By the property to be added when the display magnification reaches the fourth threshold being determined in this way based on an operation history pertaining to the plurality of development components, the viewability of properties with a high priority can be increased, improving convenience for the user. This configuration can also prevent program bugs and facilitate debugging.

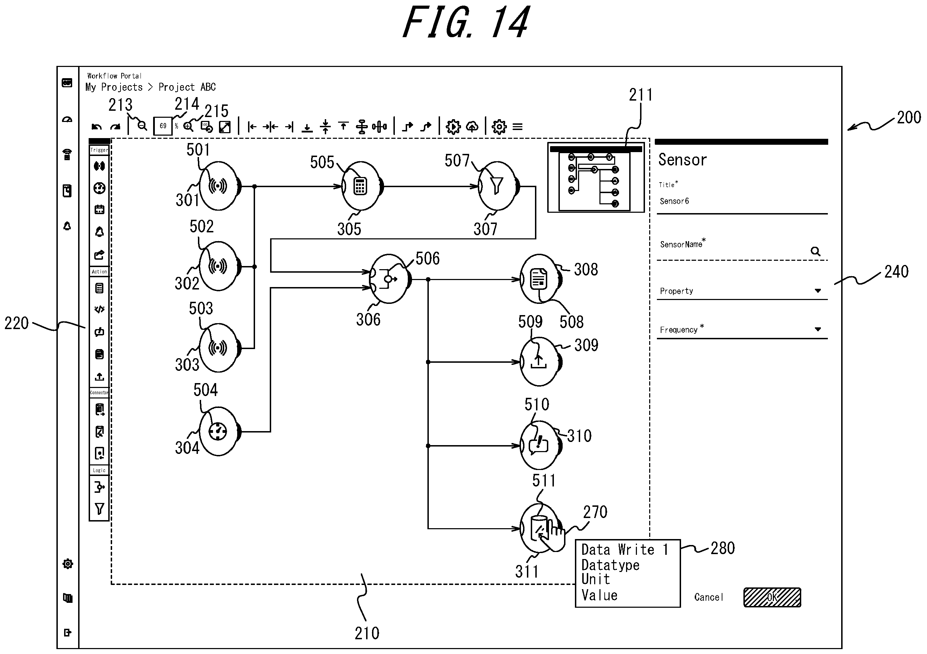

When an operation to place the mouse over any development component among the plurality of development components (mouseover operation) is performed, a property pertaining to the development component subjected to the mouseover operation may be displayed regardless of the display magnification. FIG. 14 is an example of the user interface 200 displayed when the display magnification is below the second threshold. Here, a mouse pointer 270 is placed over the development component 311. In this case, the properties pertaining to the development component 311 subjected to the mouseover are displayed. In FIG. 14, the properties pertaining to the development components 311 are displayed by a tooltip 280. A display example for when the display magnification is below the second threshold is illustrated here, but this example is not limiting. A similar display may be provided when the display magnification is equal to or greater than the second threshold. That is, when a mouseover operation is performed on any development component among the plurality of development components, the properties pertaining to the development component subjected to the mouseover operation may be displayed regardless of the display magnification. By the properties pertaining to the development component subjected to the mouseover being displayed by the tooltip 280 in this way, the properties of each development component 311 can easily be grasped.

The information processing apparatus 30 has been described as accessing the server 20 via a web browser in the present embodiment to provide the user with a software development environment, but this example is not limiting. For example, an application according to the system 10 for providing a software development environment may be installed on the information processing apparatus 30, and a software development environment may be provided to the user by communication with the server 20 via the application.

## Claims

1. A system for providing a software development environment to develop software by combining a plurality of development components, the system comprising an information processing apparatus that includes a display and a controller, wherein
the display is configured to display a user interface on which the plurality of development components is placed,
the controller is configured to change a display form of each development component and display each development component on the display in accordance with a request to change a display magnification, and
each development component is displayed in a display form that includes less information when the display magnification is below a predetermined magnification than when the display magnification is equal to or greater than the predetermined magnification, and each development component is displayed in a display form that includes a corresponding icon regardless of the display magnification.

2. The system for providing a software development environment of claim 1, wherein each development component is displayed in a display form that does not include a property pertaining to the development component when the display magnification is below a first threshold, and each development component is displayed in a display form that includes the property when the display magnification is equal to or greater than the first threshold.

3. The system for providing a software development environment of claim 2, wherein each development component is displayed in a display form that does not include a name of the development component when the display magnification is below a second threshold, each development component is displayed in a display form that includes the name when the display magnification is equal to or greater than the second threshold, and the second threshold is lower than the first threshold.

4. The system for providing a software development environment of claim 3, wherein
the plurality of development components includes at least two development components that are associated with the same icon and are connected to the same destination development component, and
the at least two development components are integrated by a corresponding integrated object and displayed when the display magnification is below a third threshold.

5. The system for providing a software development environment of claim 4, wherein the integrated object is displayed in a display form that includes the number of integrated development components.

6. The system for providing a software development environment of any one of claims 2 to 5, wherein an information amount of the property is increased to be higher when the display magnification is equal to or greater than a fourth threshold than when the display magnification is below the fourth threshold, and the fourth threshold is higher than the first threshold.

7. The system for providing a software development environment of claim 6, wherein the information amount of the property is increased based on an operation history pertaining to the plurality of development components when the display magnification is equal to or greater than the fourth threshold.

8. The system for providing a software development environment of any one of claims 2 to 7, wherein when a mouseover operation is performed on any development component among the plurality of development components, a property pertaining to the development component subjected to the mouseover operation is displayed regardless of the display magnification.

9. A method for providing a software development environment to develop software by combining a plurality of development components, the method comprising:
displaying a user interface on which the plurality of development components is placed; and
changing a display form of each development component and displaying each development component in accordance with a request to change a display magnification;
wherein each development component is displayed in a display form that includes less information when the display magnification is below a predetermined magnification than when the display magnification is equal to or greater than the predetermined magnification, and each development component is displayed in a display form that includes a corresponding icon regardless of the display magnification.

10. A non-transitory computer readable medium storing a program, for providing a software development environment, configured to cause a processor to execute operations comprising:
displaying a user interface on which a plurality of development components is placed; and
changing a display form of each development component and displaying each development component in accordance with a request to change a display magnification;
wherein each development component is displayed in a display form that includes less information when the display magnification is below a predetermined magnification than when the display magnification is equal to or greater than the predetermined magnification, and each development component is displayed in a display form that includes a corresponding icon regardless of the display magnification.
